(19) Europäisches Patentamt
European Patent Office
Office européen des brevets

(11) **EP 2 453 533 A1**

(12) **DEMANDE DE BREVET EUROPEEN**

(43) Date de publication:
**16.05.2012 Bulletin 2012/20**

(51) Int Cl.:
***H01S 3/30*** *(2006.01)*

(21) Numéro de dépôt: **11188254.4**

(22) Date de dépôt: **08.11.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **10.11.2010 FR 1059316**

(71) Demandeur: **Oxxius**
**22300 Lannion (FR)**

(72) Inventeurs:
• **Georges, Thierry**
**22700 PERROS GUIREC (FR)**
• **Landru, Nicolas**
**22560 PLEUMEUR BODOU (FR)**
• **Rouvillain, Julien**
**22300 LANNION (FR)**

(74) Mandataire: **Kingolo, Alain et al**
**Pontet Allano & Associés**
**25, rue Jean Rostand**
**Parc Orsay Université**
**FR-91893 Orsay Cedex (FR)**

(54) **Dispositif laser Raman à faible bruit, système laser Raman l'utilisant et procédé de réglage associé**

(57) La présente invention concerne un dispositif laser Raman (1) comprenant :
- un milieu amplificateur (2) absorbant à une longueur d'onde de pompe $\lambda_P$ et émettant à une longueur d'onde d'excitation $\lambda_S$,
- un milieu Raman (3) présentant au moins un décalage Stokes $\Delta\nu_R$, de façon à convertir l'émission à la longueur d'onde d'excitation $\lambda_S$ en une émission continue à une longueur d'onde Raman $\lambda_R$.
Le milieu amplificateur (2) et le milieu Raman (3) appartiennent à une cavité Raman résonnante à la longueur d'onde d'excitation $\lambda_S$ et à la longueur d'onde Raman $\lambda_R$. La longueur du milieu Raman (3) est inférieure à 9mm et la somme des espaces entre chacun des éléments du dispositif laser Raman (1) est inférieure à 2mm.
L'invention concerne en outre un système comprenant un tel dispositif laser Raman (1), ainsi qu'un procédé de réglage du dispositif laser Raman (1).

## Description

## Domaine technique

La présente invention concerne un dispositif laser Raman à faible bruit, un système laser Raman comprenant ce dispositif laser Raman, ainsi qu'un procédé associé audit dispositif.

Le domaine de l'invention est plus particulièrement mais de manière non limitative celui des lasers à solide mettant en oeuvre une émission Raman continue.

## Etat de la technique antérieure

La diffusion Raman est un processus d'optique non linéaire du troisième ordre, lors duquel il se produit un échange d'énergie entre un faisceau lumineux d'excitation (dit pompe Raman) et un milieu dit « milieu Raman ». La diffusion Raman est dite inélastique car le milieu Raman modifie la fréquence du faisceau lumineux d'excitation pour le transformer en un faisceau diffusé ou faisceau Raman. Le décalage en fréquence $\Delta \nu_R$ entre le faisceau lumineux d'excitation et le faisceau diffusé est appelé décalage Stokes. On appellera longueur d'onde Raman, la longueur d'onde du faisceau diffusé.

Un milieu Raman est caractérisé par au moins un décalage énergétique $\Delta \upsilon_R$ tel que:

$$\frac{1}{\lambda_R} = \frac{1}{\lambda_S} - \frac{\Delta \nu_R}{C}, \text{ soit}$$

- C la célérité de la lumière dans le vide,
- $\lambda_R$ est la longueur d'onde Raman,
- $\lambda_S$ est la longueur d'onde d'excitation (ou longueur d'onde de pompe Raman).

Un milieu Raman peut présenter plusieurs décalages énergétiques $\Delta \upsilon_R$ (on parle aussi de raies Raman). Plusieurs longueurs d'onde Raman $\lambda_R$ sont alors accessibles. Un milieu Raman peut être un cristal ou un milieu amorphe tel qu'un verre.

La diffusion Raman stimulée peut amplifier un signal et il est possible de réaliser un oscillateur (on parle généralement de laser Raman) en introduisant le milieu Raman pompé dans une cavité résonante à la longueur d'onde Raman, dite cavité Raman.

On peut appeler laser Raman ou dispositif laser Raman, l'ensemble formé par la cavité Raman et les différents éléments qui peuvent être situés à l'intérieur de cette cavité Raman.

Le gain Raman est proportionnel à l'intensité $I_S$ (rapport de la puissance à l'aire transverse, exprimé en GW/cm²) de la pompe Raman, à la longueurs $l$ du milieu Raman (exprimée en cm) et à un coefficient de gain intrinsèque du milieu Raman $g_R$ (exprimé en général en cm/GW). La longueur $l$ du milieu Raman est la longueur de milieu Raman traversée par la pompe Raman. L'aire transverse de la pompe Raman est l'aire d'une coupe de l'intersection de la pompe Raman avec le milieu Raman, de préférence la coupe perpendiculaire à la direction de propagation de la pompe Raman dans le milieu Raman. Le coefficient $g_R$ est en général très faible. Pour une pompe Raman à 1064 nm, ce gain vaut 0,01cm/GW pour les germano-silicates jusqu'à presque 10 cm/GW pour les meilleurs cristaux ($BaWO_4$ ou $Ba(NO_3)_2$ par exemple).

Le seuil de l'oscillation Raman est atteint lorsque le gain Raman est égal aux pertes dans le laser Raman à la longueur d'onde Raman. On note ces pertes $\alpha$. Pour une cavité linéaire, on a alors : $P_{seuil} = \alpha \pi w^2 / 2 l\, g_R$ où w est le rayon du mode de la pompe Raman et $P_{seuil}$ la puissance seuil de pompe Raman au-delà de laquelle il y a oscillation à la longueur d'onde Raman. Par exemple, une pompe Raman de 100 W, de rayon de mode de $50 \mu m$ procure un gain Raman de 0,64% dans un milieu Raman de 1cm de longueur et de gain intrinsèque égal à 5cm/GW. L'oscillation Raman n'est donc en général atteinte que pour des fortes puissances de pompe Raman, des milieux Raman plutôt longs et des pertes faibles.

Grâce à leurs capacités de guidage, les fibres ont permis de réaliser les premiers lasers Raman continus. En effet, 1W de pompe injecté dans une fibre germanosilicate de petit diamètre permet d'atteindre une intensité de pompe de 5 MW/cm² et de la conserver sur des centaines de mètres. Sur un aller retour de 100m, obtient un gain de l'ordre de 170% malgré la faiblesse du gain intrinsèque.

Une émission continue à une longueur d'onde Raman $\lambda_R$ est continue, du fait d'un pompage continu à la longueur d'onde de pompe Raman $\lambda_S$.

Dans les cristaux, l'absence de guidage requiert un compromis entre forte focalisation de la pompe Raman et longueur du milieu Raman. Par exemple un faisceau de pompe Raman de $10^{-4}$ cm² n'est collimaté que sur une distance de 20mm. Avec 1W de pompe Raman et le meilleur cristal Raman, on atteint 0,04% de gain Raman en aller-retour.

Dans toute la suite, on s'intéresse plus particulièrement à des lasers Raman pour émettre un faisceau Raman continu, et à des lasers Raman à solide, utilisant des milieux Raman solides tels que des cristaux ou des verres, par opposition aux lasers à fibre.

Un laser émettant 100W de puissance en émission continue est en général trop encombrant et trop cher pour être utilisé comme pompe Raman dans une grande majorité d'applications. Il existe plusieurs solutions pour réduire les contraintes en puissance sur la pompe Raman.

La première consiste à utiliser une pompe Raman monofréquence et à l'injecter dans une cavité externe résonante à la longueur d'onde de la pompe Raman. Ce principe permet d'augmenter très fortement la puissance de pompe Raman à l'intérieur de la cavité. Si cette cavité externe comprend le milieu Raman, le seuil de l'oscillation Raman peut être abaissé de manière significative. Le premier laser Raman continu dans des cristaux a été réalisé de cette manière en 2004 avec comme pompe Raman, un laser à Argon de 5W (« Multimode pumped continuous-wave solid-state Raman laser », Grabtchikov et al., Optics Letters, Vol. 29, No. 21, November 1, 2004, p.2524-2526). Cette dernière méthode est difficile à mettre en oeuvre car elle requiert une pompe Raman monofréquence et un ajustement de la phase de la cavité externe.

Une méthode plus simple à mettre en oeuvre consiste à superposer une cavité résonante à la longueur d'onde de pompe Raman et la cavité Raman, résonante à la longueur d'onde Raman. Ce type de configuration s'appelle laser Raman en intra-cavité. Par exemple Pask en 2005 (« Continuous-wave, all-solid-state, intracavity Raman laser », H. M. Pask, Optics Letters, Vol. 30, No. 18, September 15, 2005, p.2454-2456) a réalisé un tel laser avec une cavité dans laquelle se trouve du Nd : YAG (amplificateur de la pompe Raman à la longueur d'onde $\lambda_s$=1064 nm) et un milieu Raman (cristal de KGW) faisant osciller un signal Raman à la longueur d'onde $\lambda_R$=1176 nm. Le décalage Stokes du cristal KGW est $\Delta v_R$=27 THz (ou 901cm$^{-1}$ en unité de spectroscopie). La cavité est résonante aux deux longueurs d'onde $\lambda_s$ et $\lambda_R$. Elle est fermée par deux miroirs fortement réfléchissants aux longueurs d'onde $\lambda_s$ et $\lambda_R$. L'énergie est apportée par une pompe externe (diode émettant 20W à la longueur d'onde de $\lambda_p$=808nm). Les lasers Raman en intra-cavité sont assez faciles à mettre en oeuvre. Dans un tel dispositif, trois signaux lasers à trois longueurs d'onde sont présents : la pompe qui est absorbée par l'ion Nd, le signal laser amplifié par l'ion Nd qui est aussi la pompe Raman et le signal Raman.

Le faisceau Raman peut aussi interagir avec le milieu Raman et servir de pompe à une longueur d'onde plus longue. Dans ce cas on appelle premier Stokes, la première onde Raman servant aussi de pompe Raman et deuxième Stokes la seconde onde Raman obtenue à partir du premier Stokes. Si la cavité Raman, résonante à la longueur d'onde du premier Stokes, est aussi résonante à la longueur d'onde du deuxième Stokes, cette longueur d'onde peut atteindre le seuil d'oscillation Raman. Il est possible de continuer et cascader plusieurs ondes Stokes.

Il est également possible d'introduire un cristal non linéaire dans la cavité Raman. Ce dernier peut être accordé pour faire de la somme de fréquence entre la pompe Raman et l'onde Raman ($1/\lambda$=$1/\lambda_R$+$1/\lambda_s$) ou du doublage de fréquence de l'onde Raman ($1/\lambda$=$2/\lambda_R$). Lee et al. (« Efficient 5.3 W continuous-wave laser at 559 nm by intracavity frequency summation of fundamental and first-Stokes wavelengths in a self Raman Nd : GdVO4 laser », Lee et al., Optics letters, vol. 35, 2010, p. 682-684) ont ainsi réalisé un laser émettant à 559nm (somme de fréquence) et Dekker et al (« Continuous-wave, intracavity doubled, self-Raman operation in Nd : GdVO4 at 586.5 nm », Peter Dekker et al., Optics Express, Vol. 15, No. 11, 28 May 2007, p.7038-7046) ont réalisé un laser Raman à 586,5nm (doublage de fréquence).

Dekker et al (« Continuous-wave, intracavity doubled, self-Raman operation in Nd : GdVO4 at 586.5 nm », Peter Dekker et al., Optics Express, Vol. 15, No. 11, 28 May 2007, p.7038-7046) cite en particulier une cavité Raman de 13mm. Les auteurs étaient confrontés à une lentille thermique trop forte rendant une cavité de 24mm de long instable pour des puissances de pompe de plus de 20W. Une modélisation simple de la taille de faisceau $w$ d'un laser Raman avec une lentille de focale f est en effet donnée par $Z_R$=$\pi W^2/\lambda$=$[l_c(f-l_c)]^{1/2}$ où $Z_R$ est la distance de Rayleigh et $l_c$ est la somme des longueurs des éléments constitutifs du laser Raman divisées par leur indice de réfraction. Lorsque la puissance de pompe Pp augmente, la distance focale de la lentille thermique f(Pp) diminue. Or, le laser Raman devient instable lorsque $f(Pp)<l_c$. Les auteurs ont montré que la cavité de 13mm permettait d'obtenir une puissance Raman supérieure à la cavité de 24mm de long dans la plage de puissance de pompe allant de 10W à 22W. Finalement, le milieu Raman faisant 10mm de long, les auteurs ont dû retirer le cristal doubleur pour réaliser cette expérience.

Un inconvénient de ces lasers Raman à solide, c'est le bruit. En effet, chaque fois que le bruit a été mesuré sur ce type de laser Raman, il était élevé, par exemple supérieur à 4%RMS (voir par exemple « Diode-pumped continuous-wave Nd : YVO4 laser with self-frequency Raman conversion », Burakevich et al., Applied Physics B 86, p. 511-514, 2007, voir aussi: « Continuous-wave, intracavity doubled, self-Raman operation in Nd : GdVO4 at 586.5 nm », Peter Dekker et al., Optics Express, Vol. 15, No. 11, 28 May 2007, p.7038-7046).

Grabtchikov et al. (« Multimode pumped continuous-wave solid-state Raman laser », Grabtchikov et al., Optics Letters, Vol. 29, No. 21, November 1, 2004, p.2524-2526) attribue l'origine du bruit au fonctionnement multifréquence du laser Raman.

Or, ces valeurs de bruit sont trop importantes pour la majorité des applications notamment dans le domaine de la biologie, requérant en général un bruit RMS inférieur à 1%, voire inférieur à 0,5%.

Un autre inconvénient des dispositifs connus dans l'art antérieur est le seuil d'oscillation Raman élevé des lasers Raman à solide, en émission continue.

Nous nous intéressons ici plus particulièrement aux lasers Raman compacts utilisant des pompes de puissance moyenne ou faible, typiquement de 1W à 10W.

Pour ces lasers Raman, l'efficacité sera grande seulement si le seuil d'oscillation Raman est bas (puissance seuil de pompe préférentiellement inférieure à 2W et idéalement inférieure à 1W).

Un but de la présente invention est de proposer un dispositif laser solide Raman, du type laser à solide, permettant d'obtenir une émission Raman continue à faible bruit.

Un but supplémentaire de la présente invention est de proposer un dispositif laser Raman, du type laser à solide, présentant une puissance seuil de pompe réduite, préférentiellement inférieure à 2W et idéalement inférieure à 1W.

Un autre but de la présente invention est de proposer un système laser Raman comprenant ce dispositif laser Raman, ainsi qu'un procédé associé à ce dispositif laser Raman.

**Exposé de l'invention**

Cet objectif est atteint avec un dispositif laser Raman comprenant les éléments suivants :

- un milieu amplificateur absorbant à une longueur d'onde de pompe $\lambda_P$ et émettant à une longueur d'onde d'excitation $\lambda_S$,
- un milieu Raman présentant au moins un décalage Stokes $\Delta\nu_R$, de façon à convertir l'émission à la longueur d'onde d'excitation $\lambda_S$ en une émission continue à une longueur d'onde Raman $\lambda_R$,

dans lequel le milieu amplificateur et le milieu Raman appartiennent à une cavité Raman résonnante à la longueur d'onde d'excitation $\lambda_S$ et à la longueur d'onde Raman $\lambda_R$.

On parle aussi de longueur d'onde de pompe Raman pour la longueur d'onde d'excitation $\lambda_S$.

On parle aussi de longueur d'onde de pompe externe pour la longueur d'onde de pompe $\lambda_P$.

La longueur du milieu Raman est inférieure à 9mm et la somme des espaces entre chacun des éléments du dispositif laser Raman est inférieure à 2mm.

La longueur du milieu Raman peut être inférieure à 8mm.

La longueur du milieu Raman peut être inférieure à 6mm.

La longueur du milieu Raman peut être inférieure à 5mm.

La longueur du milieu Raman peut être inférieure à 4mm.

La longueur du milieu Raman peut être inférieure à 3mm.

La somme des espaces entre chacun des éléments du dispositif laser Raman peut être inférieure à 1mm.

Pour minimiser le seuil d'oscillation Raman, l'homme de l'art est tenté d'augmenter la longueur $l_R$ du milieu Raman et de diminuer la taille w du faisceau de pompe. (La longueur $l_R$ du milieu Raman est également notée $\ell$ en introduction.) Si la longueur $l_R$ du milieu Raman est grande alors la longueur $l_c$ de la cavité Raman est grande.

L'approche proposée est nouvelle et différente. Elle consiste à diminuer la longueur $l_c$ de la cavité Raman, ce que l'on réalise en diminuant la longueur $l_R$ du milieu Raman et en diminuant les intervalles entre les éléments du dispositif laser Raman.

De préférence, la cavité Raman est aussi courte que possible.

La longueur de la cavité Raman peut être inférieure à 10mm, en particulier si elle comprend seulement un milieu Raman et un milieu amplificateur.

La longueur de la cavité Raman peut être inférieure à 9mm, même inférieure à 8mm.

La longueur réduite de la cavité minimise le nombre de modes longitudinaux susceptibles d'osciller à la longueur d'onde signal et la longueur d'onde Raman. Les zones de stabilité modale sont donc plus larges. Nous avons vérifié expérimentalement que ce sont les sauts de modes longitudinaux qui induisent le bruit majoritaire dans les lasers Raman.

Une cavité courte permet d'obtenir une émission continue peu bruitée à une longueur d'onde Raman $\lambda_R$ (bruit inférieur à 1%RMS, et plutôt inférieur à 0,5%RMS).

Cette émission peu bruitée est obtenue sans qu'un fonctionnement monofréquence soit nécessaire, c'est-à-dire avec un dispositif particulièrement simple.

Le seuil d'oscillation Raman est réduit. On obtient par exemple une puissance seuil de pompe inférieure à 2W à la longueur d'onde de pompe $\lambda_P$, et même inférieure à 1W à la longueur d'onde de pompe $\lambda_P$.

Ces effets sont inattendus, l'homme du métier étant plutôt incité à préférer des milieux Raman longs pour augmenter le gain Raman dudit milieu.

Les coûts de fabrication du dispositif laser Raman peuvent être réduits car le milieu Raman est court.

Le milieu amplificateur à l'origine de l'oscillation du signal peut être du Nd :YAG (grenat d'yttrium-aluminium dopé au néodyme), du Nd : YVO$_4$ (yttrium orthovanadate dopé au néodyme), tout cristal ou verre dopé à l'ion Nd (néodyme), l'ion Yb (ytterbium), ou tout autre terre rare ou matériau de transition comme le Cr (chrome) ou finalement tout autre milieu amplificateur connu de l'homme du métier. Le milieu amplificateur peut être un cristal ou un verre.

La longueur d'onde Raman $\lambda_R$ est celle qui correspond au décalage Stokes $\Delta\nu_R$ mis en jeu.

La cavité Raman peut comprendre un miroir d'entrée et un miroir de sortie.

De préférence, le miroir d'entrée transmet vers l'intérieur de la cavité Raman un faisceau lumineux à la longueur d'onde de pompe $\lambda_P$. Le coefficient de transmission à la longueur d'onde de pompe $\lambda_P$ est par exemple T= 99%. Le miroir d'entrée est avantageusement hautement réfléchissant à la longueur d'onde d'excitation $\lambda_S$, côté intérieur de la cavité Raman, avec un coefficient de réflexion par exemple R$_{1S}$= 99,95%. De préférence, R$_{1S}$ est compris entre 99,90% et 99,99%. Le miroir d'entrée est avantageusement également hautement réfléchissant à la longueur d'onde Raman $\lambda_R$, côté intérieur de la cavité Raman, avec un coefficient de réflexion par exemple R$_{1R}$= 99,95%. De préférence, R$_{1R}$ est compris entre 99,90% et 99,99%.

De préférence le miroir de sortie est hautement réfléchissant à la longueur d'onde d'excitation $\lambda_S$, côté intérieur de la cavité Raman. Le coefficient de réflexion à la longueur d'onde d'excitation $\lambda_S$ côté intérieur de la cavité Raman est par exemple $R_{2S} = 99,95\%$. De préférence, $R_{2S}$ est compris entre 99,90% et 99,99%. Le miroir de sortie transmet à une longueur d'onde de sortie. La conversion mise en oeuvre dans le cadre de l'effet Raman est plus efficace en présence du faisceau à la longueur d'onde Raman, d'où la nécessité de ne laisser sortir de la cavité Raman qu'une petite partie du faisceau à la longueur d'onde Raman. La longueur d'onde de sortie peut être la longueur d'onde Raman $\lambda_R$ et le coefficient de transmission $T_{2R}$ du miroir de sortie à la longueur d'onde de sortie peut être compris entre 0,15 % et 0,25%, par exemple $T_{2R} = 0,2\%$.

La cavité Raman peut être formée linéaire.

On peut prévoir en outre dans la cavité Raman des moyens de filtrage, pour éviter que des émissions parasites oscillent. Par exemple les miroirs d'entrée et sortie peuvent avoir des transmissions inférieures à 99% aux longueurs d'onde Raman parasites.

Le dispositif laser Raman, peut comprendre en outre un milieu non linéaire de doublage en fréquence situé à l'intérieur de la cavité Raman, pour le doublage en fréquence de l'émission continue à une longueur d'onde Raman $\lambda_R$.

La longueur d'onde de sortie peut être la longueur d'onde après doublage en fréquence.

La longueur d'onde de sortie peut être la longueur d'onde après doublage en fréquence et le coefficient de transmission $T_{2NL}$ du miroir de sortie à la longueur d'onde de sortie peut être compris entre 90 % et 100%, par exemple $T_{2NL} = 95\%$.

Le dispositif laser Raman, peut comprendre en outre un milieu non linéaire de somme en fréquence situé à l'intérieur de la cavité Raman.

La longueur de la cavité Raman peut être inférieure à 20mm, en particulier inférieure à 15mm, si elle comprend un milieu Raman, un milieu amplificateur, et un milieu non linéaire de doublage en fréquence ou de somme en fréquence.

On peut sommer en fréquence le faisceau d'excitation et le faisceau Raman.

On peut sommer en fréquence un faisceau Raman correspondant à un premier décalage Stockes et un faisceau Raman correspondant à un deuxième décalage Stockes.

La longueur d'onde de sortie peut être la longueur d'onde correspondant à la somme de fréquence et le coefficient de transmission $T_{2NL}$ du miroir de sortie à la longueur d'onde de sortie peut être compris entre 90 % et 100%, par exemple $T_{2NL} = 95\%$.

Selon ces deux derniers modes de réalisation, le miroir de sortie est avantageusement hautement réfléchissant, à au moins une longueur d'onde Raman $\lambda_R$ que l'on convertit en fréquence avec le milieu non linéaire ($R_{2R}$ peut être compris entre 99,90% et 99,99%, par exemple 99,95%).

Le milieu non linéaire est de préférence un cristal non linéaire présentant des propriétés de non linéarité optique d'ordre 2, et comprenant par exemple du lithium triborate (LBO), du Beta Barium Borate (BBO), du Niobate de Lithium ($LiNbO_3$), du Borate de Bismuth (BiBO), de l'Yttrium Aluminum Borate (YAB), etc...

Préférentiellement, le milieu non linéaire est un milieu non linéaire présentant un accord de phase de type I. La coupe de type I est naturelle car les signaux ont tous la même polarisation dans les lasers Raman.

Un milieu non linéaire présentant un accord de phase de type II est cependant possible également. On peut alors orienter les axes du milieu non linéaire à 45° de ceux du milieu Raman. On peut insérer une lame d'onde entre le milieu non linéaire et le milieu Raman. Une lame d'onde peut permettre de gérer différemment la rotation de polarisation du faisceau à la longueur d'onde d'excitation $\lambda_S$, d'un faisceau à une longueur d'onde Raman $\lambda_R$, et d'un faisceau à une longueur d'onde après conversion en fréquence (par un milieu non linéaire de doublage ou de somme de fréquence).

On obtient par exemple dans un laser Raman selon l'invention avec conversion non linéaire par somme ou doublage de fréquence un bruit du signal en sortie inférieur à 0,5%RMS ( voire inférieur à 0,2%RMS).

On obtient par exemple dans un laser Raman selon l'invention avec conversion non linéaire par somme ou doublage de fréquence une puissance seuil de pompe inférieure à 2W à la longueur d'onde de pompe $\lambda_P$, voire même inférieure à 1W à la longueur d'onde de pompe $\lambda_P$.

Le dispositif laser Raman, peut être monolithique. Cela comporte plusieurs avantages :

- les lasers monolithiques sont moins sensibles aux vibrations mécaniques et ainsi plus résistants au bruit ;
- les pertes des lasers monolithiques peuvent être réduites et le seuil d'oscillation Raman peut être abaissé.

Le milieu amplificateur et le milieu Raman peuvent être formés par un unique cristal.

Cet unique cristal peut être un cristal de Nd : KGW, Nd : $PbMO_4$, Nd : $GdVO_4$, Nd : $YVO_4$ ou les mêmes cristaux dopés à l'Yb par exemple.

La longueur totale de la cavité Raman est ainsi encore réduite.

Pour assurer un fonctionnement à faible bruit sur le long terme, il est utile de mesurer le bruit ou tout paramètre donnant une information sur le bruit et de jouer sur la longueur optique du dispositif laser Raman dès que le bruit commence à augmenter.

Le dispositif laser Raman, peut comprendre des moyens pour faire varier sa longueur optique et des moyens de mesure du bruit d'un signal en sortie du dispositif laser Raman.

Les moyens de mesure du bruit peuvent consister en une photodiode et un circuit électronique de mesure.

Le signal en sortie peut être un faisceau lumineux à une longueur d'onde Raman $\lambda_R$, notamment dans le cas où la cavité Raman ne comprend pas de milieu non linéaire.

Le signal en sortie peut être un faisceau après conversion en fréquence (par un milieu non linéaire de doublage ou de somme de fréquence), dans le cas où la cavité Raman comprend un milieu non linéaire.

Grâce aux moyens pour faire varier la longueur optique du dispositif laser Raman, on peut effectuer un balayage en longueur optique de ce dispositif.

L'association avec les moyens de mesure du bruit peut permettre d'identifier des zones de fonctionnement peu bruité.

Un fonctionnement peu bruité peut correspondre à un bruit du signal en sortie inférieur à 0,5%RMS, et même inférieur à 0,2%RMS. On peut même atteindre moins de 0,1% RMS de bruit.

Pour rappel, la longueur optique d'un milieu est égale à sa longueur multipliée par l'indice optique de ce milieu.

Les moyens pour faire varier la longueur optique du dispositif laser Raman peuvent comprendre un élément parmi :

- un actuateur piézo électrique pour déplacer un élément du dispositif laser Raman,
- des moyens pour faire varier la température globale du dispositif laser Raman,
- des moyens pour faire varier la température d'un élément du dispositif laser Raman.
- des moyens pour faire varier l'indice de l'un des milieux (par exemple cristal ou verre) de la cavité par le biais d'un effet électro-optique.

Le dispositif laser Raman, peut comprendre des moyens de contre-réaction agissant sur la longueur optique du dispositif laser Raman en réponse au bruit d'un signal en sortie du dispositif laser Raman.

On peut mettre en place un algorithme de contre-réaction pour modifier la longueur optique du dispositif laser Raman en fonction d'une mesure de bruit.

On peut amener et/ou de maintenir le dispositif laser Raman dans une zone de fonctionnement peu bruité, sans effort de réglage particulier de la part d'un utilisateur.

Un dispositif laser Raman monolithique peut permettre de s'affranchir de moyens de contre-réaction.

Au moins l'un des éléments parmi un miroir d'entrée et un miroir de sortie formant ensemble la cavité Raman peut être un miroir plan.

Le milieu Raman peut être un cristal de KTP, qui présente une très bonne efficacité en gain Raman.

L'invention concerne aussi un système laser Raman comprenant un dispositif laser Raman selon l'invention, et une diode de pompe produisant une émission continue à la longueur d'onde de pompe $\lambda_P$.

Le système laser Raman peut en outre comprendre :

- des moyens de détection de la puissance d'un signal en sortie du dispositif laser Raman, agissant sur
- des moyens de contre-réaction sur un courant d'alimentation de la diode de pompe.

On peut ainsi asservir en puissance le système, en jouant sur le courant d'alimentation de la diode de pompe de façon à obtenir un faisceau en sortie du système présentant une puissance prédéterminée.

L'invention concerne enfin un procédé de réglage d'un dispositif laser Raman selon l'invention, comprenant une étape de balayage de la longueur optique du dispositif laser Raman et de mesure du bruit d'un signal en sortie du dispositif laser Raman, de façon à déterminer au moins une zone de fonctionnement peu bruité.

Le balayage peut être mis en oeuvre lors d'une étape préliminaire de réglage et/ou en oeuvre au cours du fonctionnement du dispositif laser Raman. La mesure du bruit se fait de préférence hors de la cavité Raman, sur le faisceau de sortie.

**Description des figures et modes de réalisation**

D'autres avantages et particularités de l'invention apparaîtront à la lecture de la description détaillée de mises en oeuvre et de modes de réalisation nullement limitatifs, et des dessins annexés suivants :

- la figure 1 illustre un premier mode de réalisation d'un dispositif selon l'invention ;
- la figure 2 illustre un deuxième mode de réalisation d'un dispositif selon l'invention ;
- la figure 3 illustre un troisième mode de réalisation d'un dispositif selon l'invention ; et
- la figure 4 illustre un premier mode de réalisation d'un système selon l'invention.

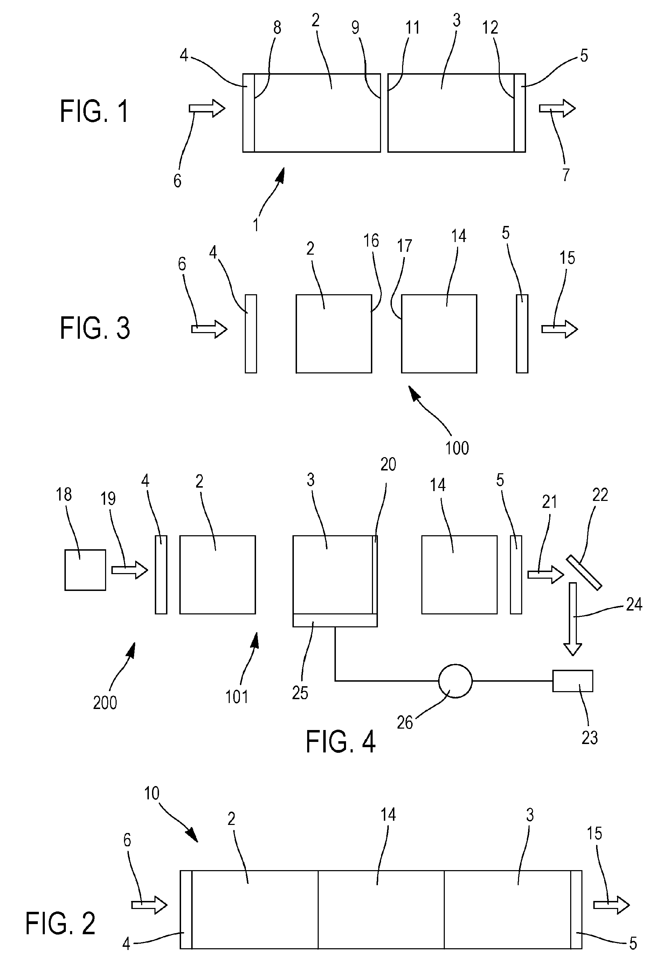

On va tout d'abord décrire en référence à la figure 1 un premier mode de réalisation de l'invention dans lequel un dispositif laser Raman 1 selon l'invention comprend un milieu amplificateur 2 et un cristal Raman 3.

Le milieu amplificateur 2 est un cristal de Nd : $YVO_4$ de 1,6 mm de long.

Le cristal Raman 3 est un cristal de $YVO_4$ (orthovanadate d'yttrium) de 1.6 mm de long.

Les deux cristaux sont séparés de quelques centaines de $\mu m$.

Un miroir d'entrée 4 et un miroir de sortie 5 forment une cavité Raman.

Les miroirs d'entrée 4 et de sortie 5 sont des miroirs plans.

Les miroirs 4 et 5 peuvent être des traitements réfléchissants déposés sur une face respectivement du milieu amplificateur 2 et du cristal Raman 3.

Le miroir d'entrée 4 est hautement réfléchissant (R>99,95%) à la longueur d'onde d'excitation $\lambda_S$=1064nm, et à la longueur d'onde Raman $\lambda_R$=1176nm.

Le miroir de sortie 5 est hautement réfléchissant (R>99,95%) à la longueur d'onde d'excitation $\lambda_S$=1064nm, et faiblement transmettant (T=0,3%) à la longueur d'onde Raman $\lambda_R$=1176nm.

La longueur de la cavité Raman est inférieure à 4mm. C'est la cavité Raman en intracavité la plus courte connue par les auteurs.

Une diode de pompe (diode laser à émetteur large de 100$\mu$m, non représentée) émet à une longueur d'onde $\lambda_P$=808nm (voir flèche 6) et apporte l'énergie au dispositif laser Raman 1.

Le milieu amplificateur 2 absorbe à la longueur d'onde de pompe $\lambda_P$ et émet à une longueur d'onde d'excitation $\lambda_S$=1064nm. Le seuil de l'oscillation laser à 1064nm est inférieur à 500mW de pompe. On obtient 30W à 200W de puissance à la longueur d'onde d'excitation $\lambda_S$=1064nm, à l'intérieur de la cavité Raman.

Le décalage Raman est de 890cm$^{-1}$ dans le cristal Raman 3 de YVO$_4$ et correspond à une émission Raman proche de 1176nm pour une longueur d'onde d'excitation comprise entre 1064nm et 1065nm.

Le faisceau à la longueur d'onde d'excitation $\lambda_S$ est partiellement converti par le cristal Raman 3 en un faisceau à une longueur d'onde Raman $\lambda_R$. Le seuil de l'oscillation Raman est de 1,2 W de pompe. Le signal en sortie du dispositif laser Raman 1 est représenté par la flèche 7 et correspond à une émission à la longueur d'onde Raman $\lambda_R$. La puissance Raman à 1176nm atteint 300mW avec 2,7 W de pompe à 808nm.

Nous avons mesuré parallèlement le bruit et le spectre du dispositif laser Raman 1 pour différentes températures du milieu amplificateur 2 de Nd :YVO$_4$. Des fonctionnements stables et de faible bruit (<0.1% RMS) sont observé lorsque le spectre Raman est stable (il est en général constitué de deux modes longitudinaux). Pour certaines températures, le spectre n'est plus stable (il saute constamment de modes longitudinaux), et le bruit devient grand (>1% RMS).

Avec des longueurs de milieu Raman 3 variant de 1,5mm à 6mm, la puissance seuil de pompe peut même être inférieure à 1W à la longueur d'onde $\lambda_P$. Par exemple, on mesure une puissance seuil de pompe de 0,6W avec un milieu Raman de 3,2mm.

L'idéal est de travailler avec uniquement des cristaux à faces parallèles. Un parallélisme meilleur que la valeur standard commerciale (<20" i.e. <20 secondes d'arc) est à conseiller. Les pertes sont en général augmentées lorsque l'espace entre les éléments du dispositif laser Raman est grand. Il faut donc réduire cet espace, voire le faire disparaître en contactant les éléments.

Selon une variante non représentée, le milieu amplificateur 2 est un cristal de Nd : YAG émettant à une longueur d'onde d'excitation égale à 1123nm, et le cristal Raman 3 est un cristal de KTP.

Le cristal Raman 3 mesure 5mm*5mm*4mm, soit une longueur de 4mm.

La longueur totale de la cavité Raman est de 9mm, avec une longueur de 5mm pour le milieu amplificateur 2.

Le dispositif laser Raman 1 est donc monolithique : la somme totale des espaces entre chacun des éléments du dispositif laser Raman 1 est égale à 0mm (intervalle entre la face interne à la cavité du miroir d'entrée 4 et la face d'entrée 8 du milieu amplificateur 2, plus l'intervalle entre la face de sortie 9 du milieu amplificateur 2 et la face d'entrée 11 du cristal Raman 3, plus l'intervalle entre la face de sortie 12 du cristal Raman 3 et la face interne à la cavité du miroir de sortie 5). On réduit ainsi les pertes aux interfaces des composants.

L'avantage de la structure monolithique est que lorsque l'on fixe la température de la cavité au milieu d'une plage de fonctionnement puissant et à faible bruit, le fonctionnement puissant et à faible bruit est conservé sur des durées longues (plusieurs jours). Une plage de fonctionnement puissant et à faible bruit correspond à une zone de stabilité modale telle qu'énoncée ci-avant.

Selon un autre mode de réalisation représenté à la figure 2, le dispositif laser Raman 10 selon l'invention, comprend :

- milieu amplificateur 2 constitué d'un cristal de Nd : YVO$_4$ de 1,6 mm de long,

- un milieu non linéaire 14 constitué d'un cristal de BiBO de 4 mm de long

- un milieu Raman 3 constitué d'un cristal d'un cristal de YVO$_4$ de 1,6 mm de long.

Les miroirs 4, 5 sont déposés sur le milieu amplificateur 2 et sur le milieu Raman 3. Les deux miroirs 4, 5 sont fortement réfléchissant (R>99.9%) à la longueur d'onde d'excitation ($\lambda_S$=1064 nm) et à la longueur d'onde Raman ($\lambda_R$=1176nm).

Le miroir de sortie 5 transmet (T=99%) à une longueur d'onde de sortie (voir ci-après). Au moins une autre interface dans le dispositif laser Raman est fortement réfléchissante à la longueur d'onde de sortie, de façon que tout le faisceau à la longueur d'onde de sortie émerge du même côté du dispositif laser Raman 10.

Les facettes internes du dispositif laser Raman 10 sont très peu réfléchissantes à 1064nm et à 1176nm, ce qui limite les pertes.

Les trois cristaux sont contactés par adhérence moléculaire (sans colle) de telle sorte que la cavité soit monolithique de longueur 7,2mm.

En changeant l'accord de phase milieu non linéaire 14, il est possible de privilégier la somme de fréquence plutôt que le doublage de fréquence :

- Dans une configuration le cristal 14 de BiBO est coupé pour l'accord de phase de la génération de seconde harmonique de l'émission Raman à 1176 nm. Une émission (voir flèche 15) jaune-orange à une longueur d'onde de sortie égale à 588 nm est alors observée ;

- Dans une autre configuration le cristal de BiBO est coupé pour l'accord de phase de la somme de fréquence entre le signal et l'émission Raman. Une émission vert jaune à une longueur d'onde de sortie égale à 559 nm est observée.

Dans les deux cas, le seuil d'oscillation Raman est atteint pour une puissance de pompe à 808nm de moins d'1W. En ajustant la température de la cavité, il a été possible de dépasser 100mW d'émission visible (à 588 nm et à 559 nm) avec 2W de pompe et un fonctionnement à bas bruit (<0.1% RMS). Ce fonctionnement a été conservé sur une plage de typiquement 0.5°C de large.

En modifiant simplement les miroirs 4, 5 des configurations précédentes, une autre émission Raman peut être favorisée : si la transmission des miroirs 4, 5 à 1176nm est supérieure à quelques % et si la réflexion à 1109nm est forte (supérieure à 99.9%), c'est la raie à 1109nm correspondant au décalage Raman de 380cm$^{-1}$ qui oscille. Il est possible de doubler en fréquence cette raie et obtenir une émission à 554,5nm ou la sommer avec un faisceau à la longueur d'onde d'excitation à 1064nm pour obtenir une émission à 543nm.

On peut également utiliser du KTP en tant que milieu Raman et obtenir une émission Raman à 1148nm (décalage Raman de l'ordre de 690cm$^{-1}$).

Des résultats très similaires pourraient être obtenus en changeant le cristal de YVO$_4$ par des cristaux de KGW ou KYW ou d'autres cristaux connus pour leur efficacité Raman. Il est également possible d'utiliser d'autres bandes d'émission de l'ion Nd (par exemple autour de 0,9$\mu$m ou de 1,3$\mu$m) ou d'autres ions amplificateurs comme l'ion Yb. Des milieux amplificateurs comme le Nd : KYW, le Nd :YAG ou des cristaux dopés à l'Ytterbium associés à un milieu Raman et éventuellement un cristal non linéaire peuvent être utilisés pour atteindre de très nombreuses longueurs d'onde. De la même manière, il est possible d'utiliser d'autres cristaux non linéaires comme par exemple le LBO ou le LiNbO$_3$.

On peut atteindre en particulier la région du spectre de 561nm à 659nm qui ne peut pas être obtenue par doublage ou somme de fréquence à partir d'une émission infrarouge d'une terre rare pompée par diode infrarouge.

Selon une variante non représentée, le dispositif laser Raman 10 selon l'invention, comprend :

- un cristal de Nd :YVO$_4$ de 3,2mm de long, servant à la fois de milieu amplificateur 2 et de milieu Raman 3, et

- un milieu non linéaire 14 constitué d'un cristal de BiBO de 4 mm de long.

Une autre configuration avantageuse de l'invention, telle que représentée à la figure 3, prend avantage du fait que les cristaux xTy (x=K ou R et y=P ou A) sont à la fois de bons cristaux non linéaires pour la somme ou le doublage de fréquence et de bons milieux Raman. Par exemple le KTP a deux décalages Raman efficaces à 270cm$^{-1}$ et 700cm$^{-1}$. Avec un signal autour de 1064nm, on peut obtenir alors des émissions Raman à 1096nm et 1150nm.

La figure 3 représente un dispositif laser Raman 100 selon l'invention comprenant :

- milieu amplificateur 2 constitué d'un cristal de Nd : YVO$_4$ de 1,6mm de long, et
- un milieu non linéaire et milieu Raman 14 constitué d'un cristal de KTP de 5mm de long.

Un cristal de KTP présente l'avantage d'être plus facilement contactable optiquement avec d'autres cristaux. Il est plus facile d'y déposer un traitement réfléchissant du fait de son plus faible coefficient de dilatation thermique.

La cavité Raman est fermée par deux miroirs 4 et 5.

Le dispositif laser Raman 100 émet à 548 nm

Le milieu non linéaire 14 est coupé par l'accord de phase pour le doublement de fréquence de l'émission à 1096 nm et ses axes de polarisation sont orientés à 45° de ceux du cristal de Nd :YVO$_4$.

Il est souhaitable d'insérer une lame d'onde entre les deux cristaux de manière à obtenir des émissions à 1096nm et à 548nm polarisées linéairement. Une telle lame d'onde peut par exemple gérer différemment la rotation de polarisation de l'onde émise par le milieu amplificateur, d'une onde à une longueur d'onde Raman et de l'onde obtenue après conversion en fréquence par le milieu non linéaire. On utilise par exemple une lame de quartz pour tourner la polarisation de l'onde Raman de manière différentielle par rapport à l'onde à 1096nm et à l'onde à 548nm.

Le milieu non linéaire et milieu Raman 14 peut aussi être constitué d'un cristal de LBO ou de LiBO.

La figure 4 présente un système 200 avec un dispositif laser Raman 101 selon l'invention. Le dispositif laser Raman 101 comprend un miroir d'entrée 4, un milieu amplificateur 2, un cristal Raman 3, un cristal non linéaire 14 et un miroir de sortie 5.

Le milieu amplificateur 2 et le cristal Raman 3 peuvent être formés par un unique cristal de Nd : YVO$_4$, d'une longueur totale de 5mm.

Le cristal non linéaire 14 est un cristal de LBO mettant en oeuvre un doublage de fréquence, et d'une longueur de 10mm.

La longueur totale de la cavité Raman est de 16mm (environ 1mm d'espaces d'air dans le dispositif laser Raman 100).

Une diode de pompe 18 émet un faisceau de pompe continu représenté par la flèche 19, qui traverse le miroir d'entrée 4 pour être absorbé par le milieu amplificateur 2.

Le milieu amplificateur 2 émet alors un faisceau à une longueur d'onde d'excitation réfléchie à l'intérieur du dispositif laser Raman par les miroirs d'entrée 4 et de sortie 5.

La cavité Raman est résonnante à cette longueur d'onde d'excitation.

Ce faisceau à une longueur d'onde d'excitation est converti par le cristal Raman 3 en un faisceau à une longueur d'onde Raman, lequel est ensuite doublé en fréquence par le cristal non linéaire 14.

Un miroir 20 est formé sur la face de sortie du cristal Raman 3 pour réfléchir à la longueur d'onde obtenue après doublage de fréquence.

Les différentes caractéristiques du milieu amplificateur 2, du cristal Raman 3, du cristal non linéaire 14, du miroir d'entrée 4, du miroir de sortie 5, sont celles présentées en référence à la figure 2.

En sortie de la cavité Raman, un faisceau de sortie est représenté par la flèche 21. Le faisceau de sortie est à la longueur d'onde obtenue après conversion en fréquence (par le milieu non linéaire 14).

Le système 200 selon la figure 4 comprend en outre (non représentés) des moyens de détection de la puissance du faisceau de sortie. Lesdits moyens agissent sur des moyens de contre-réaction sur un courant d'alimentation de la diode de pompe 18. On peut ainsi maintenir sensiblement constante la puissance du faisceau de sortie.

Une lame de prélèvement 22 permet de dévier une partie 24 du faisceau de sortie vers des moyens de mesure du bruit 23.

Ces moyens de mesure du bruit 23 peuvent consister en une photodiode en entrée de laquelle se trouve un filtre qui coupe le signal continu, ou une photodiode en sortie de laquelle se trouve un filtre passe-haut.

Le système 200 comprend en outre des moyens 25 pour faire varier la longueur optique du dispositif laser Raman 101.

Ces moyens 25 pour faire varier la longueur optique du dispositif laser Raman 101 consistent en un module à effet Peltier qui permet de contrôler la température du cristal Raman 3 contre lequel il est placé.

En faisant varier finement la température d'au moins un élément du dispositif laser Raman 101 (ici le cristal Raman 3), on observe des plages de fonctionnement bruité et des plages de fonctionnement à très faible niveau de bruit.

En fonctionnement bruité, l'amplitude du bruit peut dépasser 50% de l'amplitude maximale du signal. L'analyse en fréquence du bruit montre qu'il s'étend des basses fréquences (quelques Hz) jusqu'à 300 à 500 kHz.

La forte amplitude du bruit et les fréquences élevées (>100 kHz) rendent impossible l'asservissement du laser par une contre-réaction sur le courant de pompe.

Or, une simple variation de 0,1°C de la température du dispositif laser Raman 100 (ici, la température du cristal Raman 3) suffit à obtenir un fonctionnement très peu bruité. On obtient par exemple des amplitudes de bruit pic-pic inférieures à 0,25% (soit un bruit inférieur à 0,1% RMS).

Le laser peut ainsi être asservi de manière stable si la température est contrôlée de manière très précise (à mieux que 0,1°C). Le bruit mesuré est alors inférieur à 0,2% RMS.

Cet asservissement est mis en oeuvre par des moyens de contre-réaction 26 recevant comme entrée le bruit mesuré sur le faisceau de sortie par les moyens de mesure du bruit 23, et agissant en conséquence sur les moyens 25 pour faire varier la longueur optique du dispositif laser Raman, de façon à amener puis maintenir le dispositif laser Raman 101 dans une plage de fonctionnement non-bruité.

La boucle de contre réaction permet d'assurer un fonctionnement stable sur plusieurs mois ou années.

En construisant des dispositifs lasers Raman selon l'invention « monolithiques » (formées de cristaux ou verres contactés optiquement les uns aux autres), on peut alors observer des fonctionnements à faible bruit (<0.5% RMS) conservés sur plusieurs heures de fonctionnement.

Avec des systèmes lasers Raman selon l'invention monolithiques et asservis en température, le fonctionnement peu bruité, peut être conservé sur des milliers d'heures de fonctionnement.

On peut expliquer des observations à la base de l'invention de la manière suivante :

La seule approche connue à ce jour pour minimiser le seuil d'oscillation Raman consistait à augmenter la longueur $l_R$ du milieu Raman et diminuer la taille du faisceau w. Si $l_R$ est grande alors la longueur $l_c$ de la cavité Raman est grande.

La seule façon de diminuer w est de travailler avec une focale f courte (donc d'ajouter un élément focalisant dans la cavité Raman), à peine supérieure à $l_c$. (0<f-$l_c$<<$l_c$).

Contrairement aux préjugés de l'homme du métier, l'invention propose ici de s'affranchir d'un élément focalisant dans la cavité, en considérant que l'ajout d'un élément focalisant dans la cavité est responsable de pertes supplémentaires.

Avec le matériel disponible au moment de l'invention, on travaille alors avec une focale grande devant la longueur de cavité Raman : f>2$l_c$. Ainsi, la distance de Rayleigh $Z_R$>$l_c$ et donc le faisceau est collimaté dans la cavité Raman.

Les pertes induites par les réflexions parasites sont faibles.

Il n'est pas non plus nécessaire d'ajouter d'élément focalisant.

La faible valeur de $l_c$ garantit néanmoins une taille de faisceau faible.

La réduction de la longueur du milieu Raman est alors contrebalancée par la faible taille w du faisceau laser et par les faibles pertes de la cavité Raman.

D'autre part, on considère que la zone $0 < f - l_c < l_c$ est défavorable pour deux raisons.

La première est la forte sensibilité de w à toute variation de lentille thermique ou de longueur de cavité. Cela peut être une source de bruit supplémentaire. D'autre part, cela signifie que $Z_R < l_c$ et donc que le faisceau n'est pas collimaté dans la cavité Raman. Il est connu que toute réflexion en dehors de la zone de collimation est source de perte.

On peut donc expliquer que le seuil d'oscillation Raman soit plus faible pour une longueur de cavité Raman réduite, cette longueur de cavité réduite étant obtenue selon l'invention grâce à une longueur de milieu Raman inférieure à 9mm et une somme des espaces entre les éléments de la cavité Raman inférieure à 2mm.

En outre, le bruit et le spectre du signal de sortie dans différents dispositifs lasers Raman ont été analysés.

Contrairement à la dynamique du « green noise » dans les lasers doublés en fréquence en intra-cavité, ces analyses ont montré de façon inattendue que le bruit dans les dispositifs lasers Raman n'est pas lié à la structure multifréquence mais à des instabilités spectrales c'est-à-dire à des transitions de mode longitudinal.

Il a pu être observé pour la première fois des fonctionnements multifréquence sans bruit.

Les expériences menées ont montré que lesdites instabilités spectrales sont liées à des variations de la longueur optique du dispositif laser Raman (produit des longueurs par les indices de réfraction), notamment liées à des vibrations mécaniques et aux variations thermiques.

Si on asservit la température avec une consigne proche de la transition modale, le dispositif laser Raman devient bruité car de très faibles variations mécaniques ou thermiques induisent un changement de mode longitudinal.

Il s'est avéré que plus la cavité Raman est courte, plus les zones de transition spectrale sont éloignées en température. A l'inverse, dans les cavités Raman longues, les zones de transition spectrale sont tellement rapprochées qu'il est presque impossible d'éviter du bruit lié à une transition spectrale.

On voit donc qu'il est avantageux de travailler avec des cavités Raman les plus courtes possibles, car les zones de stabilité modale sont d'autant plus larges.

On travaille avec des éléments, tels que le cristal Raman, le milieu amplificateur, le cas échéant un milieu non linéaire biréfringent, aussi courts que possible.

Cela rend le laser Raman plus résistant aux effets thermiques et cela permet de réaliser plus facilement des lasers Raman sans bruit.

La longueur totale du dispositif laser Raman monolithique peut être inférieure à 20 mm. Avantageusement, elle est inférieure à 12mm.

Les dispositifs laser Raman selon l'invention composés de plusieurs éléments séparés peuvent être plus sensibles aux vibrations et doivent alors être plus courts. La longueur totale de ces lasers Raman est de préférence inférieure à 15mm. Avantageusement, elle est inférieure à 10mm.

Bien sûr, l'invention n'est pas limitée aux exemples qui viennent d'être décrits et de nombreux aménagements peuvent être apportés à ces exemples sans sortir du cadre de l'invention. On peut par exemple s'affranchir du milieu amplificateur. On peut utiliser d'autres milieux amplificateurs, d'autres milieux Raman, et utiliser d'autres raies Raman d'un cristal Raman.

## Revendications

1. Dispositif laser Raman (1 ; 10 ; 100 ; 101) comprenant les éléments suivants :

   - un milieu amplificateur (2) absorbant à une longueur d'onde de pompe $\lambda_P$ et émettant à une longueur d'onde d'excitation $\lambda_S$,
   - un milieu Raman (3 ; 14) présentant au moins un décalage Stokes $\Delta\nu_R$, de façon à convertir l'émission à la longueur d'onde d'excitation $\lambda_S$ en une émission continue à une longueur d'onde Raman $\lambda_R$,

   dans lequel le milieu amplificateur (2) et le milieu Raman (3 ; 14) appartiennent à une cavité Raman (4, 5) résonnante à la longueur d'onde d'excitation $\lambda_S$ et à la longueur d'onde Raman $\lambda_R$, **caractérisé en ce que** la longueur du milieu Raman (3 ; 14) est inférieure à 9mm et **en ce que** la somme des espaces entre chacun des éléments du dispositif laser Raman (1 ; 10 ; 100 ;101) est inférieure à 2mm.

2. Dispositif laser Raman (10 ; 100 ; 101) selon la revendication 1, **caractérisé en ce qu'**il comprend en outre un milieu non linéaire (14) de doublage en fréquence situé à l'intérieur de la cavité Raman (4, 5).

3. Dispositif laser Raman (10 ; 100 ; 101) selon la revendication 1, **caractérisé en ce qu'**il comprend en outre un milieu non linéaire (14) de somme en fréquence situé à l'intérieur de la cavité Raman (4, 5).

4. Dispositif laser Raman (1 ; 10 ; 100 ; 101) selon l'une des revendications 1 à 3, **caractérisé en ce qu'**il est monolithique.

**5.** Dispositif laser Raman (1 ; 10 ; 100 ; 101) selon l'une des revendications 1 à 4, **caractérisé en ce que** le milieu amplificateur (2) et le milieu Raman (3) sont formés par un unique cristal.

**6.** Dispositif laser Raman (1 ; 10 ; 100 ; 101) selon l'une des revendications 1 à 5, **caractérisée en ce qu'**il comprend des moyens (25) pour faire varier sa longueur optique et des moyens de mesure du bruit (23) d'un signal en sortie du dispositif laser Raman (1 ; 10 ; 100 ; 101).

**7.** Dispositif laser Raman (1 ; 10 ; 100 ; 101) selon la revendication 6, **caractérisée en ce que** les moyens (25) pour faire varier la longueur optique du dispositif laser Raman comprennent un élément parmi :

- un actuateur piézo électrique pour déplacer un élément du dispositif laser Raman (100),
- des moyens pour faire varier la température globale du dispositif laser Raman (100),
- des moyens (25) pour faire varier la température d'un élément du dispositif laser Raman (100),
- des moyens pour faire varier l'indice de l'un des milieux de la cavité par le biais d'un effet électro-optique.

**8.** Dispositif laser Raman (1 ; 10 ; 100 ; 101) selon l'une des revendications 6 ou 7, **caractérisée par** des moyens de contre-réaction (26) agissant sur la longueur optique du dispositif laser Raman (1 ; 10 ; 100 ; 101) en réponse au bruit d'un signal en sortie du dispositif laser Raman (1 ; 10 ; 100 ; 101).

**9.** Dispositif laser Raman (1 ; 10 ; 100 ; 101) selon l'une des revendications 1 à 8, **caractérisé en ce qu'**au moins l'un des éléments parmi un miroir d'entrée (4) et un miroir de sortie (5) formant ensemble la cavité Raman est un miroir plan.

**10.** Dispositif laser Raman (1 ; 10 ; 100 ; 101) selon l'une des revendications 1 à 9, **caractérisée en ce que** le milieu Raman (3 ; 14) est un cristal de KTP.

**11.** Système laser Raman (200), **caractérisé en ce qu'**il comprend un dispositif laser Raman (1 ; 10 ; 100 ; 101) selon l'une quelconque des revendications 1 à 10, et une diode de pompe (18) produisant une émission continue à la longueur d'onde de pompe $\lambda_P$.

**12.** Système laser Raman (200) selon la revendication 11, **caractérisée en ce qu'**il comprend en outre :

- des moyens de détection de la puissance d'un signal en sortie du dispositif laser Raman (1 ; 10 ; 100 ; 101), agissant sur
- des moyens de contre-réaction sur un courant d'alimentation de la diode de pompe (18).

**13.** Procédé de réglage d'un dispositif laser Raman (1 ; 10 ; 100 ; 101) selon l'une des revendications 1 à 10, **caractérisé par** une étape de balayage de la longueur optique du dispositif laser Raman (1 ; 10 ; 100 ; 101) et de mesure du bruit d'un signal en sortie du dispositif laser Raman (1 ; 10 ; 100 ; 101), de façon à déterminer au moins une zone de fonctionnement peu bruité.

FIG. 1

FIG. 3

FIG. 4

FIG. 2

Europäisches
Patentamt

European
Patent Office

Office européen
des brevets

**RAPPORT DE RECHERCHE EUROPEENNE**

Numéro de la demande

EP 11 18 8254

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | PASK H M: "Continuous-wave, all-solid-state, intracavity Raman laser", OPTICS LETTERS OPT. SOC. AMERICA USA, vol. 30, no. 18, 15 septembre 2005 (2005-09-15), pages 2454-2456, XP002613061, ISSN: 0146-9592 | 1 | INV. H01S3/30 |
| A | * le document en entier * ----- | 2-13 | |
| A,D | GRABTCHIKOV A S ET AL: "Multimode pumped continuous-wave solid-state Raman laser", OPTICS LETTERS OPT. SOC. AMERICA USA, vol. 29, no. 21, 1 novembre 2004 (2004-11-01), pages 2524-2526, XP002658000, ISSN: 0146-9592 * le document en entier * ----- | 1-13 | |
| A,D | LEE A J ET AL: "Efficient 5.3 W cw laser at 559 nm by intracavity frequency summation of fundamental and first-Stokes wavelengths in a self-Raman Nd:GdVO4 laser", OPTICS LETTERS OPTICAL SOCIETY OF AMERICA USA, vol. 35, no. 5, 1 mars 2010 (2010-03-01), pages 682-684, XP002658002, ISSN: 0146-9592 * le document en entier * ----- -/-- | 1-13 | DOMAINES TECHNIQUES RECHERCHES (IPC) H01S |

Le présent rapport a été établi pour toutes les revendications

| Lieu de la recherche | Date d'achèvement de la recherche | Examinateur |
|---|---|---|
| Munich | 9 décembre 2011 | Bésuelle, Emmanuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................................

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 18 8254

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | DEKKER PETER ET AL: "Continuous-wave, intracavity doubled, self-Raman laser operation in Nd:GdVO(4) at 586.5 nm.", OPTICS EXPRESS 28 MAY 2007 LNKD-PUBMED:19547021, vol. 15, no. 11, 28 mai 2007 (2007-05-28), pages 7038-7046, XP002658003, ISSN: 1094-4087 * page 7040; figure 1 * * le document en entier * | 1-13 | |
| A,D | BURAKEVICH V N ET AL: "Diode-pumped continuous-wave Nd:YVO4 laser with self-frequency Raman conversion", APPLIED PHYSICS B ; LASERS AND OPTICS, SPRINGER, BERLIN, DE, vol. 86, no. 3, 2 décembre 2006 (2006-12-02), pages 511-514, XP019490526, ISSN: 1432-0649 * le document en entier * | 1-13 | |
| X | PASK H M ET AL: "Wavelength-versatile visible and UV sources based on crystalline Raman lasers", PROGRESS IN QUANTUM ELECTRONICS, PERGAMON PRESS, OXFORD, GB, vol. 32, no. 3-4, 1 janvier 2008 (2008-01-01), pages 121-158, XP025694851, ISSN: 0079-6727, DOI: 10.1016/J.PQUANTELEC.2008.09.001 [extrait le 2008-09-25] | 1 | DOMAINES TECHNIQUES RECHERCHES (IPC) |
| A | * page 141; figures 1,4,5; tableau 6 * * 4e ; page 144 * * le document en entier * | 2-13 | |

-/--

Le présent rapport a été établi pour toutes les revendications

| Lieu de la recherche | Date d'achèvement de la recherche | Examinateur |
|---|---|---|
| Munich | 9 décembre 2011 | Bésuelle, Emmanuel |

Europäisches
Patentamt

European
Patent Office

Office européen
des brevets

# RAPPORT DE RECHERCHE EUROPEENNE

Numéro de la demande

EP 11 18 8254

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SHUANGHONG DING ET AL: "Numerical modelling of passively Q-switched intracavity Raman lasers; Numerical modelling of intracavity Raman lasers", JOURNAL OF PHYSICS D. APPLIED PHYSICS, IOP PUBLISHING, BRISTOL, GB, vol. 40, no. 9, 7 mai 2007 (2007-05-07), pages 2736-2747, XP020112380, ISSN: 0022-3727, DOI: 10.1088/0022-3727/40/9/010 * page 2741, alinéa 3e; figure 1 * * le document en entier * | 1-13 | |
| X<br><br><br>A | WO 2007/118269 A1 (UNIV MACQUARIE [AU]; DEKKER PETER [AU]; PASK HELEN MARGARET [AU]; PIPE) 25 octobre 2007 (2007-10-25) * alinéas [0027], [0138] - [0143], [0201], [0238]; figure 1 * * le document en entier * | 1<br><br><br>2-13 | |
| X<br><br><br>A | WO 2006/032105 A1 (UNIV MACQUARIE [AU]; PIPER JAMES AUSTIN [AU]; PASK HELEN MARGARET [AU]) 30 mars 2006 (2006-03-30) * page 38, ligne 19 - ligne 34; figure 1 * * le document en entier * | 1<br><br><br>2-13 | DOMAINES TECHNIQUES RECHERCHES (IPC) |
| T | DHARMADHIKARI J A ET AL: "Nonlinear refraction in potassium gadolinium tungstate: An efficient Raman crystal and laser host", APPLIED PHYSICS LETTERS, AIP, AMERICAN INSTITUTE OF PHYSICS, MELVILLE, NY, US, vol. 83, no. 13, 29 septembre 2003 (2003-09-29), pages 2527-2529, XP012035205, ISSN: 0003-6951, DOI: 10.1063/1.1614442 * le document en entier * | 1-13 | |

-/--

Le présent rapport a été établi pour toutes les revendications

| Lieu de la recherche | Date d'achèvement de la recherche | Examinateur |
|---|---|---|
| Munich | 9 décembre 2011 | Bésuelle, Emmanuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 18 8254

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MILDREN R P ET AL: "Efficient, all-solid-state, Raman laser in the yellow, orange and red", OPTICS EXPRESS OPT. SOC. AMERICA USA, vol. 12, no. 5, 8 mars 2004 (2004-03-08), XP002658400, ISSN: 1094-4087 * 3e ; page 788 * * le document en entier * ----- | 1-13 | |
| T | PASK H M: "The design and operation of solid-state Raman lasers", PROGRESS IN QUANTUM ELECTRONICS ELSEVIER UK, vol. 27, no. 1, 2003, pages 3-56, XP002658403, ISSN: 0079-6727 * le document en entier * ----- | 1-13 | |
| T | LANDRU N ET AL: "Low noise Raman lasers for yellow-orange spectrum coverage", PROCEEDINGS OF SPIE, SPIE, US, vol. 7912, 7 septembre 2011 (2011-09-07), XP002658399, ISSN: 0277-786X ----- | 1-13 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 9 décembre 2011 | Bésuelle, Emmanuel |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 8254

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-12-2011

| Document brevet cité au rapport de recherche | Date de publication | Membre(s) de la famille de brevet(s) | Date de publication |
|---|---|---|---|
| WO 2007118269 A1 | 25-10-2007 | AU 2007240113 A1<br>EP 2005541 A1<br>JP 2009533847 A<br>US 2010054284 A1<br>WO 2007118269 A1 | 25-10-2007<br>24-12-2008<br>17-09-2009<br>04-03-2010<br>25-10-2007 |
| WO 2006032105 A1 | 30-03-2006 | AU 2005287885 A1<br>EP 1810380 A1<br>US 2008259969 A1<br>WO 2006032105 A1 | 30-03-2006<br>25-07-2007<br>23-10-2008<br>30-03-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **GRABTCHIKOV et al.** Multimode pumped continuous-wave solid-state Raman laser. *Optics Letters,* 01 Novembre 2004, vol. 29 (21), 2524-2526
- **H. M. PASK.** Continuous-wave, all-solid-state, intracavity Raman laser. *Optics Letters,* 15 Septembre 2005, vol. 30 (18), 2454-2456
- **LEE et al.** Efficient 5.3 W continuous-wave laser at 559 nm by intracavity frequency summation of fundamental and first-Stokes wavelengths in a self Raman Nd : GdVO4 laser. *Optics letters,* 2010, vol. 35, 682-684

- **PETER DEKKER et al.** Continuous-wave, intracavity doubled, self-Raman operation in Nd : GdVO4 at 586.5 nm. *Optics Express,* 28 Mai 2007, vol. 15 (11), 7038-7046
- **BURAKEVICH et al.** Diode-pumped continuous-wave Nd : YVO4 laser with self-frequency Raman conversion. *Applied Physics B,* 2007, vol. 86, 511-514